# EUROPÄISCHE PATENTSCHRIFT

(11) **EP 0 508 159 B1**
(45) Veröffentlichungstag und Bekanntmachung des Hinweises auf die Patenterteilung: **07.07.1999**
(21) Anmeldenummer: 92104461.6
(22) Anmeldetag: 16.03.1992
(51) Int. Cl.: F02D 13/02

(54) **Einlasssteuerung für Verbrennungskraftmaschinen**
Admission control for internal combustion engines
Distribution d'admission pour moteurs à combustion interne

(30) Priorität: 06.04.1991 DE 4111153
(43) Veröffentlichungstag der Anmeldung: 14.10.1992
(73) Patentinhaber: FEV Motorentechnik GmbH & Co. KG, D-52078 Aachen (DE)
(72) Erfinder: Pischinger, Franz, Prof. Dr. techn., W-5100 Aachen (DE)
(74) Vertreter: Langmaack, Jürgen, Dipl.-Ing.

(56) Entgegenhaltungen:
- EP-A- 0 112 494
- EP-A- 0 141 165
- EP-A- 0 376 714
- DE-A- 3 401 362
- DE-A- 3 427 092
- GB-A- 2 172 051

## Beschreibung

Die Erfindung bezieht sich auf ein Verfahren zur Steuerung einer 4-Takt-Verbrennungskraftmaschine mit verstellbaren Einlaßsteuerzeiten und Einzelsaugrohrstrecken je Zylinder oder je Einlaß entsprechend dem Oberbegriff des Anspruchs 1.

Um ohne besondere Aufladeaggregate eine hohe Leistung solcher Maschinen zu erreichen, ist man bestrebt, eine möglichst wirksame Öffnung des Einlaßorgans (große Menge je Zeiteinheit) zu verwirklichen. Dazu wird das Einlaßventil so früh wie möglich geöffnet, allerdings mit Rücksicht auf nachteilige Einflüsse von Ventilüberschneidung mit dem Schließen des Auslaßventils, und es wird erst dann geschlossen, wenn eine maximale Zylinderfüllung erreicht ist. Eine zusätzliche Maßnahme zur Erhöhung der Zylinderladung ist die Anwendung einer Einlaßleitung je Zylinder, deren Dimensionen (Länge und Durchmesser) so abgestimmt sind, daß durch Reflexion gegen Ende des Schließens des Einlaßventils Überdruck vor dem Einlaßorgan erzeugt.wird. Nachteilig bei dieser Anordnung ist die notwendige große Länge der Ansaugleitung, die häufig einen Einbau in Fahrzeuge und ähnliches Gerät erschwert.

Wenn solche Maschinen über einen weiten Drehzahlbereich mit hohem Drehmoment betrieben werden, so benötigen sie bei Vollast sowohl bei tiefen wie bei hohen Drehzahlen eine gute Zylinderfüllung und eine thermodynamisch günstige Verbrennung. Eine gute Füllung kann durch Steuerungsorgane mit gutem Durchflußverhalten, das heißt mit geringem Strömungswiderstand, erzielt werden. Das gilt besonders für die Einlaßorgane. Zum Beispiel haben 4-Ventilmotoren (2 Einlaßventile) mit strömungsgünstigen Kanälen in diesem Zusammenhang bei hohen Drehzahlen ein besonders günstiges Verhalten. Der niedrige Strömungswiderstand ergibt ein Einströmen ohne große Druckverluste. Die Zylinderfüllung wird noch unterstützt durch die dynamischen Vorgänge in den Saugleitungen. Die durch die räumlichen Gegebenheiten in Motoren notwendigerweise kurzen Leitungen ergeben durch Reflexionsvorgänge während der bei hohen Drehzahlen kurzen Einlaßzeiten Überdruck vor dem Zylinder, bevor die Einlaßventile schließen. Dadurch wird die einströmende Frischladungsmenge vergrößert. Gleichzeitig sichern die bei hohen Drehzahlen vorhandenen hohen Strömungsgeschwindigkeiten ein genügend hohes Turbulenzniveau im Zylinder, das auch wegen der kurzen zur Verfügung stehenden Zeit bis zum Ende der Verdichtung weitgehend erhalten bleibt und zu einer thermodynamisch günstigen schnellen Verbrennung führt.

Im Bereich niedriger Drehzahlen hingegen haben Motoren mit den bekannten Verfahren der Einlaßsteuerung gerade bei sehr strömungsgünstigen Einlaßorganen sowohl eine geringere Zylinderfüllung als auch einen ungünstigeren Verbrennungsablauf. Die schlechte Füllung ist erstens infolge der meist (in Grad Kurbelwinkel) festen Steuerzeiten durch teilweises Rückschieben der Frischladung in das Ansaugsystem wegen des auf hohe Drehzahl ausgelegten Einlaßschließens bedingt. Zweitens wirken die Schwingungen im Saugrohr bei den niedrigen Drehzahlen ungünstig auf die Zylinderfüllung, da die Wellenlaufzeiten nicht mehr zur Öffnungszeit des Einlaßventils passen. Drittens kommt noch das Aufheizen der Zylinderladung an den heißen Wänden im Zylinder wegen der längeren Verweilzeit hinzu. Die bei der niedrigen Drehzahl geringen Einströmgeschwindigkeiten bedingen außerdem ein niedriges Turbulenzniveau, das infolge der größeren Verweilzeit bis zum Verbrennungsbeginn noch weiter abnimmt. Die Folge ist eine langsam ablaufende Verbrennung mit ungünstigem Wirkungsgrad und eine erhöhte Neigung zum Klopfen. Insgesamt liegt das erzielbare Drehmoment bei den niedrigen Drehzahlen daher ungünstig, was besonders für Fahrzeugmotoren nachteilig ist und eine Abstimmung des Antriebs für niedrigen Kraftstoffverbrauch erschwert.

Man hat schon versucht, diesen bei niedrigen Drehzahlen bestehenden Nachteilen entgegenzuwirken. Beispielsweise kann man Saugrohre mit variabler Länge verwenden, so daß bei niedriger Drehzahl die wirksame Abmessung (z.B. Saugrohrlänge) durch Umschaltung oder andere mechanische Mittel der niedrigen Drehzahl angepaßt wird. Dabei fällt es beim eingeschränkten Bauraum in Fahrzeugen oft schwer, die nötigen voluminösen Abmessungen unterzubringen. Auch ist es möglich, insbesonders bei mehreren Einlaßventilen die Einströmquerschnitte durch Abschalten jeweils parallel wirkender Saugrohre zu verringern, wodurch in Verbindung mit einer Längenanpassung die Dynamik und die Einströmgeschwindigkeit verbessert werden kann. Der Aufwand dafür ist verhältnismäßig hoch, und die erzielbaren Effekte sind begrenzt. Eine weitere Möglichkeit besteht in der Drehverstellung der Einlaßnockenwelle (bei tiefer Drehzahl entgegen der Drehrichtung), so daß bei gleicher Öffnungsdauer ein früherer Einlaßschluß dem Rückströmen nach Ansaugende bei beginnendem Kolbenhub entgegenwirkt. Ungünstigerweise ist damit auch ein früheres Einlaßöffnen verbunden, das eine Rückströmung von Abgas in den Einlaßkanal zur Folge hat. Das kann sich ungünstig auf die Füllung und das Klopfverhalten auswirken. Die für eine rasche klopffreie Verbrennung nötige Turbulenz kann durch all diese Maßnahmen nicht erzielt werden, wenn gleichzeitig der Verlust an Füllung bei Höchstleistung nicht zu groß werden darf.

Es ist möglich, durch variable Öffnungszeiten der Ventile die Steuerzeiten den Anforderungen eines Motors im gesamten Betriebsbereich anzupassen. Bisher zielt dieses Vorgehen auf Veränderung des Einlaßschlusses bei Vollast und auf Veränderung der Öffnungszeit bei Teillast. Letztere Maßnahme dient der Verminderung der Zylinderladung zur Laststeuerung bei Teillast. Eine zufriedenstellende Lösung zur Darstellung eines hohen Vollastdrehmoments bei niedrigen Drehzahlen bei Hochleistungsmotoren ist bisher auch damit nicht möglich geworden.

Aus EP-A-0 141 165 ist es ferner bekannt, in der Saugrohrstrecke mit Abstand zu den Einlaßventilen eine ansteuerbare Blende als Zusatzsteuerorgan anzuordnen, durch die die Ansaugleitung bei niedrigen Drehzahlen über den weitaus größten Teils des Ansaugtaktes verschlossen und die erst in der Endphase des Ansaugvorgangs voll geöffnet wird. Hierdurch soll eine Speicherung des bei Einlaßschluß des Einlaßventils herrschenden Druckniveaus in der Ansaugleitung erreicht werden, so daß beim nachfolgenden öffnen des zugehörigen Einlaßventils, bei geschlossener Blende, aufgrund des erhöhten Druckniveaus in dem verschlossenen Ansaugleitungsabschnitt Frischgas in den Zylinder einströmt und eine die Füllung vermindernde Rückströmung von Abgasen vermieden wird. Eine aufeinander abgestimmte Steuerung von Hauptsteuerorganen, d. h. Einlaß- und Auslaßventil und des Zusatzsteuerorgans ist sehr schwierig zu bewerkstelligen, da Gasschwingungen, in Strömungsrichtung gesehen, sowohl vor als auch hinter dem Zusatzsteuerorgan entstehen, so daß die Gefahr besteht, daß die Schwingungen sich gegenseitig auslöschen.

In DE-A-3 401 362, die den nächstkommenden Stand der Technik bildet, ist ein Steuerverfahren für eine Viertakt-Kolbenbrennkraftmaschine beschrieben, bei der durch eine aufeinander abgestimmte Ansteuerung der Einlaßventile und der Auslaßventile über die Druckdifferenzen zwischen Gaseinlaß und Gasauslaß die Füllung des Zylinders mit Frischgas beeinflußt werden soll und bei bestimmten Betriebszuständen eine Verwirbelung des in den Zylinder eintretenden Frischgases erzielt werden soll.

Der vorliegenden Erfindung liegt die Aufgabe zugrunde, die Füllung und Verbrennung eines 4-Taktmotors bei hoher Last, insbesondere bei Vollast, für niedrige Drehzahlen erheblich zu verbessern, ohne auf ein gutes Verhalten bei hohen Drehzahlen verzichten zu müssen. Die Nachteile der bekannten Maßnahmen sollen dabei vermieden werden.

Dies wird erfindungsgemäß mit den im Anspruch 1 angegebenen Verfahrensschritten erreicht. Dabei entsteht bei geschlossenem Einlaßventil während des Abwärtsganges des Kolbens zunächst ein verminderter Druck im Zylinder, der beim späten Öffnen des Einlaßventils ein Einströmen mit erhöhter Geschwindigkeit bewirkt. Dadurch wird eine starke Unterdruckwelle im Einlaßkanal ausgelöst, die am Saugrohreintritt als Überdruckwelle reflektiert wird und bei entsprechenden Abmessungen des Saugrohres so rechtzeitig vor Einlaßschluß vor dem Einlaßventil eintrifft, daß eine hohe Füllung des Zylinders sichergestellt wird.

Auch bewirken die dabei erzielten hohen Eintrittsgeschwindigkeiten die für eine thermodynamisch günstige schnelle Verbrennung nötige hohe Turbulenz der Zylinderladung. Wegen des erfindungsgemäß spät liegenden Einlaßöffnens ist die Einlaßzeit verkürzt, so daß damit die Längenabmessungen der Saugrohre für günstiges Nachladen geringer sein können. Damit werden die Bedingungen zur Dimensionierung und/oder Umschaltung des Saugsystems für einen großen Drehzahlbereich verbessert, und ein Umschalten auf eine geänderte Saugrohrgeometrie kann unter Umständen sogar überflüssig sein. Damit die Bedingungen für den Ladungswechsel auch bei den hohen Drehzahlen und im ganzen Drehzahlbereich hohen Anforderungen entsprechen, wird erfindungsgemäß der Zeitpunkt des Einlaßöffnens drehzahlabhängig stufenlos oder in Stufen so verstellt, daß mit zunehmender Drehzahl der Öffnungsbeginn früher erfolgt. Das Verfahren paßt auf diese Weise für Vollast die für die hohe Füllung des Zylinders und für eine thermodynamisch günstige Verbrennung erforderlichen Einströmverhältnisse den Bedingungen der jeweiligen Drehzahl an.

Das Verfahren wird mit voll variablen Einlaßventil-Stelleinrichtungen verwirklicht. Diese Stelleinrichtungen (z.B. elektromechanische nach DE-A-30 24 109) ermöglichen eine stufenlose Anpassung der Steuerzeit "Einlaß öffnet" sowie der Öffnungsdauer an die Drehzahl zur Erzielung einer günstigsten Drehmomentcharakteristik. Im Zusammenhang mit 4-Ventilmotoren können mit diesen voll variablen Stelleinrichtungen auch jeweils eines der zwei Einlaßventile bei tieferen Drehzahlen stillgelegt werden, so daß das noch arbeitende Ventil mit einem Kanal kleineren Querschnitts und für tiefere Drehzahlen abgestimmter Länge zusammenwirken kann. Damit kann das Verfahren besonders gut zur Erzielung eines breiten Drehzahlbereiches mit hoher Vollastfüllung genutzt werden. Die Füllung kann erheblich über das mit den bisher bekannten Steuerzeiten mögliche Maß gesteigert werden. Besonders günstig ist die Verwendung von Ventil-Stelleinrichtungen mit drehzahlunabhängiger Öffnungs- und Schließgeschwindigkeit. Dadurch kann der Öffnungsimpuls durch spätes Öffnen bei niedrigen Drehzahlen besonders wirkungsvoll in Nachladung gegen Einlaßschluß umgesetzt werden.

Vorteilhafte Ausgestaltungen des Verfahrens sind in den Unteransprüchen angegeben.

Die Erfindung wird nachfolgend anhand der Zeichnungen näher erläutert.

Fig. 1 zeigt im Diagramm den Zylinderdruck in Abhängigkeit von dem Hubvolumen für ein Arbeitsspiel eines 4-Takt-Hubkolbenmotors.

Fig. 2 zeigt schematisch und vereinfacht einen Querschnitt durch einen Teil eines 4-Takt-Hubkolbenmotors mit vier Ventilen je Zylinder.

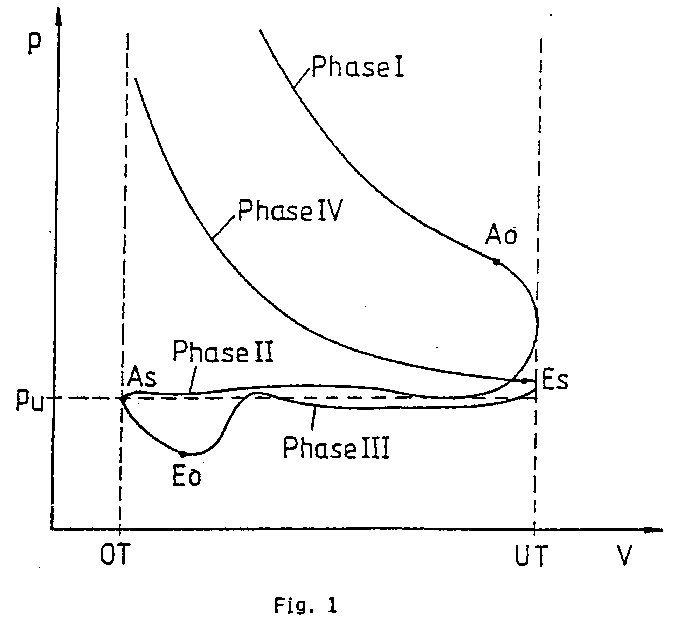

Fig. 1 beschreibt den Zylinderdruckverlauf p in Abhängigkeit von dem Zylindervolumen V für ein Arbeitsspiel eines 4-Takt-Hubkolbenmotors. Die Bezeichnung UT (unterer Totpunkt) kennzeichnet die tiefste Stellung des Kolbens im Zylinder; OT (oberer Totpunkt) ist die höchste Stellung des Kolbens. Zwischen diesen beiden, durch senkrecht gestrichelte Linien dargestellten Positionen vollzieht sich ein Arbeitsspiel des 4-Takt-Hubkolben-Motors wie folgt:

In der mit Phase I gekennzeichneten Expansionsphase wird der Kolben durch den Explosionsdruck des zuvor gezündeten Kraftstoff-Luftgemisches zum unteren Totpunkt UT hin bewegt. Im Bereich des unteren Totpunktes UT - in der Regel kurz davor - wird das Auslaßventil geöffnet (Ao).

Während der Phase II, der sogenannten Ausschiebephase, bewegt sich der Kolben von UT nach OT und schiebt dabei bei geöffnetem Auslaßventil die verbrannte Zylinderladung in das Abgassystem. Im Bereich des oberen Totpunktes OT wird das Auslaßventil geschlossen (As). Das Einlaßventil wird erfindungsgemäß, und entgegen den allgemein üblichen Verfahren, verzögert während der anschließenden Abwärtsbewegung des Kolbens geöffnet (Eo), so daß sich im Zylinder zunächst ein Unterdruck aufbaut. Beim Öffnen des Einlaßventils wird dieser Unterdruck durch das mit hoher Geschwindigkeit einströmende Frischgemisch schlagartig abgebaut.

Während der folgenden Ansaugphase, Phase III, saugt der Kolben durch das geöffnete Einlaßventil Frischgemisch in den Zylinder.

Gleichzeitig läuft eine durch das Öffnen des Einlaßventils gegen den Unterdruck im Brennraum erzeugte starke Unterdruckwelle durch das Saugsystem und wird am Saugrohreintritt als Überdruckwelle reflektiert. Diese Überdruckwelle erreicht bei entsprechender Saugrohrabmessung rechtzeitig vor Einlaß-Schließt (Es) das Einlaßventil und sorgt so durch einen Nachladeeffekt für eine hohe Füllung des Zylinders.

Nach Schließen des Einlaßventils wird in Phase 4 während der erneuten Aufwärtsbewegung des Kolbens von UT nach OT das zuvor angesaugte Frischgemisch komprimiert und gezündet, so daß sich der beschriebene Vorgang wiederholt.

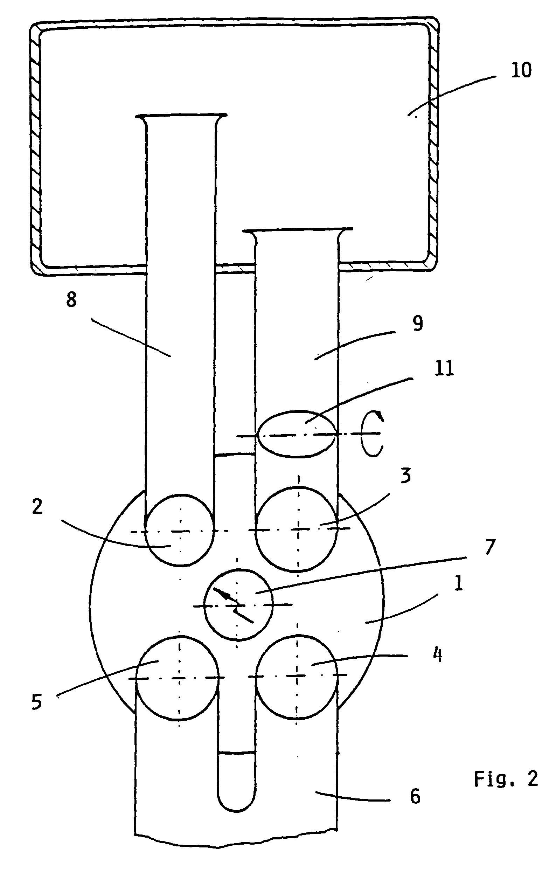

Fig. 2 zeigt in schematischer Darstellung einen Querschnitt durch einen Teil eines Hubkolbenmotors mit vier Ventilen je Zylinder. Dargestellt ist ein Zylinder 1 mit zwei Einlaßventilen 2 und 3 sowie zwei Auslaßventilen 4 und 5. Weiterhin zu erkennen ist Auslaßkanal 6 und Zündkerze 7. Getrennte Einlaßkanäle 8 und 9 mit unterschiedlichen Querschnitten und Längen enden im Luftsammelbehälter 10. Einlaßkanal 9 besitzt eine Klappe 11, durch die Einlaßkanal 9 geschlossen werden kann.

Mit variablen Stelleinrichtungen kann jeweils eines der zwei Einlaßventile bei tieferen Drehzahlen stillgelegt werden, so daß das noch arbeitende Ventil mit einem Kanal kleineren Querschnitts und für tiefere Drehzahlen bemessener Länge zusammenwirken kann.

Bei niedrigen Drehzahlen und hohem Drehmoment (hohe Last bis Vollast) werden dabei die Ventil-Steuerzeiten derart geändert, daß der Öffnungsbeginn des Einlasses in einen späteren-Zeitpunkt nach dem oberen Totpunkt verlegt wird, und zwar derart, daß die beim Öffnen des Einlasses initiierte Druckwelle bei entsprechender Saugrohrlänge vor dem Schließen des Einlasses eine Nachladung des Zylinders bewirkt. Der Öffnungsbeginn des Einlasses erfolgt dabei in einem Bereich von 10-90 Grad Kurbelwinkel, vorzugsweise 20-60 Grad Kurbelwinkel, nach dem oberen Totpunkt.

Bei steigender Last wird im unteren Drehzahlbereich mit abnehmender Motordrehzahl der Öffnungsbeginn des Einlasses zunehmend zu späteren Zeitpunkten (in Grad Kurbelwinkel) nach dem oberen Totpunkt verlegt.

Die Spätverstellung des Einlaßöffnens kann kontinuierlich oder in Stufen erfolgen. Auch kann es vorteilhaft sein, daß gleichzeitig mit der Spätverstellung des Einlaßöffnens das Einlaßschließen stufenweise oder kontinuierlich nach "früh" gestellt wird.

Die Verstellung der Steuerzeiten kann durch eine elektromagnetisch gesteuerte Ventil-Stelleinrichtung oder durch mechanische Verdrehung von gemeinsam auf einen Stößel arbeitende Nockenkonturen erfolgen. Auch kann die Verstellung der Steuerzeiten durch eine hydraulische Ventilsteuerung vorgenommen werden.

Weitere vorteilhafte Möglichkeiten bestehen darin, daß von zwei Einlaßventilen 2, 3 nur eines verstellt wird und das andere geschlossen bleibt, oder daß von zwei Einlaßventilen 2, 3 nur eines verstellt wird und der Einlaßkanal zum anderen durch die Klappe 11 nahe am Einlaßventil verschlossen wird.

Auch kann der zu dem verstellten Ventil gehörige Einlaßkanal getrennt ausgebildet und länger sein als der zu dem verschlossenen Einlaß gehörige.

Schließlich wird beim Übergang von hoher Last zu niedriger Last (Teillast) die Spätverstellung des Einlaßöffnens kontinuierlich rückgängig gemacht wird.

## Patentansprüche

1. Verfahren zur Steuerung der mit roll variablen Stelleinrichtung versehener Einlaßventile von 4-Takt-Brennkraftmaschinen mit verstellbaren Einlaßsteuerzeiten und Einzelsaugrohrstrecken je Zylinder oder je Einlaß, dadurch gekennzeichnet, daß bei niedrigen Drehzahlen und hohem Drehmoment, d.h. hohe Last bis Vollast, die Ventilsteuerzeiten derart geändert werden, daß der Öffnungsbeginn des Einlaßventils in einen späteren Zeitpunkt in einem Bereich von 10 - 90° Kurbelwinkel nach dem oberen Totpunkt verlegt wird, so daß die beim Öffnen des Einlaßventils erzeugte Druckwelle bei entsprechender Saugrohrlänge vor dem Schließen des Einlaßventils im Bereich des unteren Totpunktes eine Nachladung des Zylinders bewirkt und daß bei steigender Last im unteren Drehzahlbereich mit abnehmender Motordrehzahl der Öffnungsbeginn des Einlaßventils zunehmend zu späteren Zeitpunkten, in Grad Kurbelwinkel, nach dem oberen Totpunkt verlegt, wird und daß beim Übergang von hoher Last zu niedriger Last, d.h. Teillast, die Spätverstellung des Öffnungsbeginns des Einlaßventils kontinuierlich rückgängig gemacht wird.

2. Verfahren nach Anspruch 1, dadurch gekennzeichnet, daß der Öffnungsbeginn des Einlaßventils in einem Bereich von 20 - 60° Kurbelwinkel nach dem oberen Totpunkt erfolgt.

3. Verfahren nach Anspruch 1, dadurch gekennzeichnet, daß die Spätverstellung des Öffnungsbeginns des Einlaßventils kontinuierlich erfolgt.

4. Verfahren nach Anspruch 1, dadurch gekennzeichnet, daß die Spätverstellung des Öffnungsbeginns des Einlaßventils in Stufen erfolgt.

5. Verfahren nach Anspruch 1, dadurch gekennzeichnet, daß gleichzeitig mit der Spätverstellung des Öffnungsbeginns des Einlaßventils das Schließen des Auslaßventils stufenweise oder kontinuierlich nach "früh" gestellt wird.

6. Verfahren nach Anspruch 1, dadurch gekennzeichnet, daß die Verstellung der Steuerzeiten durch eine elektromagnetisch gesteuerte Ventil-Stelleinrichtung erfolgt.

7. Verfahren nach Anspruch 1, dadurch gekennzeichnet, daß die Verstellung der Steuerzeiten durch eine hydraulische Ventilsteuerung erfolgt.

8. Verfahren nach Anspruch 1, dadurch gekennzeichnet, daß von zwei Einlaßventilen nur eines verstellt wird und das andere geschlossen bleibt.

9. Verfahren nach Anspruch 8, dadurch gekennzeichnet, daß der zu dem zu verstellenden Einlaßventil gehörige Einlaßkanal getrennt ausgebildet und länger ist als der zu dem verschlossenen Einlaß gehörige.

## Claims

1. A method for controlling the admission valves, provided with a fully-variable adjustment means, of 4-stroke internal combustion engines with adjustable admission control times and individual suction pipe lengths per cylinder or per intake, characterised in that at low speeds and high torque, i.e. high load to full load, the valve control times are altered such that the start of opening of the admission valve is shifted to a later time in a range from 10 - 90° crank angle after top dead centre, so that the pressure wave generated upon opening the intake valve, with a corresponding length of suction pipe before the closure of the admission valve effects subsequent loading of the cylinder in the region of the bottom dead centre, and that in the case of increasing load in the lower speed range with decreasing motor speed the start of opening of the admission valve is increasingly shifted to later times, in degrees of crank angle, after top dead centre, and that upon the transition from high load to low load, i.e. partial load, the late adjustment of the start of opening of the admission valve is continuously cancelled.

2. A method according to Claim 1, characterised in that the start of opening of the admission valve takes place in a range from 20 - 60° crank angle after top dead centre.

3. A method according to Claim 1, characterised in that the late adjustment of the start of opening of the admission valve takes place continuously.

4. A method according to Claim 1, characterised in that the late adjustment of the start of opening of the admission valve takes place in steps.

5. A method according to Claim 1, characterised in that the closure of the admission valve is set to "early" in steps or continuously, simultaneously with the late adjustment of the start of opening of the admission valve.

6. A method according to Claim 1, characterised in that the adjustment of the control times is effected by an electromagnetically-controlled valve adjustment means.

7. A method according to Claim 1, characterised in that the adjustment of the control times is effected by a hydraulic valve control means.

8. A method according to Claim 1, characterised in that of two admission valves only one is adjusted and the other remains closed.

9. A method according to Claim 8, characterised in that the admission port associated with the admission valve which is to be adjusted is made separate and is longer than the one associated with the closed intake.

## Revendications

1. Procédé pour la commande de soupapes d'admission munies d'un dispositif de réglage entièrement variable et destinées à des moteurs à combustion interne à 4 temps présentant des temps de distribution d'admission réglables et des trajets individuels de tubulure d'admission par cylindre ou par admission, caractérisé en ce qu'à bas régime et pour un couple élevé, c'est à dire pour une charge élevée jusqu'à une pleine charge, les temps de distribution des soupapes sont modifiés de telle sorte que le début de l'ouverture de la soupape d'admission est décalé à un instant ultérieur dans une plage de 10 à 90° de l'angle de vilebrequin après le point mort haut, de telle sorte que l'onde de pression générée lors de l'ouverture de la soupape d'admission provoque, avant la fermeture de la soupape d'admission dans la zone du point mort bas, un remplissage du cylindre pour une longueur correspondante de la tubulure d'admission, en ce que pour une charge croissante dans la plage de bas régime avec un régime décroissant du moteur, le début de l'ouverture de la soupape d'admission est décalé à des instants de plus en plus tard, exprimés en degré de l'angle du vilebrequin, après le point mort haut, et en ce que lors du passage d'une charge élevée à une charge faible, c'est à dire à une charge partielle, le réglage retardé du début de l'ouverture de la soupape d'admission régresse de manière continue.

2. Procédé selon la revendication 1, caractérisé en ce que le début de l'ouverture de la soupape d'admission a lieu dans une plage de 20 à 60° de l'angle de vilebrequin après le point mort haut.

3. Procédé selon la revendication 1, caractérisé en ce que le réglage retardé du début de l'ouverture de la soupape d'admission a lieu de manière continue.

4. Procédé selon la revendication 1, caractérisé en ce que le réglage retardé du début de l'ouverture de la soupape d'admission a lieu graduellement.

5. Procédé selon la revendication 1, caractérisé en ce qu'en même temps que le réglage retardé du début de l'ouverture de la soupape d'admission, la fermeture de la soupape d'échappement est réglée graduellement ou de manière continue dans le sens de l'"avance".

6. Procédé selon la revendication 1, caractérisé en ce que le réglage des temps de distribution se fait par un dispositif de réglage de soupape commandé par voie électromagnétique.

7. Procédé selon la revendication 1, caractérisé en ce que le réglage des temps de distribution se fait par une commande hydraulique des soupapes.

8. Procédé selon la revendication 1, caractérisé en ce que sur les deux soupapes d'admission, une seule est réglée et l'autre reste fermée.

9. Procédé selon la revendication 8, caractérisé en ce que le canal d'admission associé à la soupape d'admission à régler est réalisé séparément et est plus long que celui faisant partie de l'admission fermée.
